# EUROPÄISCHE PATENTANMELDUNG

(11) **EP 1 123 840 A2**
(43) Veröffentlichungstag der Anmeldung: **16.08.2001**
(21) Anmeldenummer: 00126741.8
(22) Anmeldetag: 06.12.2000
(51) Int. Cl.: B60R 9/06, B60R 9/10

(54) **Heckträger für Kraftfahrzeuge zur Aufnahme eines motorisierten Zweirades**

(30) Priorität: 08.02.2000 DE 20002196 U
(71) Anmelder: FB Metallbearbeitung und Vertriebs GmbH, 64584 Biebesheim (DE)
(72) Erfinder: Brenneisen, Heinrich, 64579 Gernsheim (DE)

(57) **Zusammenfassung**

Heckträger für Kraftfahrzeuge zur Aufnahme eines motorisierten Zweirades mit einem an Verbindungsstücken (2) des Kraftfahrzeuges befestigten Tragrahmen (6) ,dem eine Standschiene (10) für das Zweirad zugeordnet ist.Zur Erzielung einer Gewichtsreduzierung bei einfachem Aufbau ist vorgesehen,dass die Standschiene (10) an ihrem einen Ende schwenkbar am Tragrahmen (6) gelagert ist.In ihrer waagerechten Erstreckung ist die Standschiene relativ zum Tragrahmen festlegbar.Zur Durchführung der Schwenkbewegung ist der Standschiene eine Hebe- und Senkeinrichtung (16) zugeordnet.

## Beschreibung

Die Erfindung betrifft einen Heckträger nach dem Oberbegriff des Anspruchs 1.

Ein derartiger allgemein bekannter Heckträger weist eine stationäre Tragekonstruktion auf,für die eine separate Auffahrschiene erforderlich ist um das Motorrad von der Tragekonstruktion auf die Straße oder umgekehrt bewegen zu können.Die Auffahrschiene muß ständig mitgeführt werden und bedeutet eine Gewichtsbelastung für das Kraftfahrzeug.Ferner sind Heckträger bekannt,deren Tragekonstruktion in ihrer Gesamtheit absenk- und anhebbar ausgebildet ist.Wegen der komplexen Antriebseinheit ist eine hohe Gewichtsbelastung zu erwarten.

Es stellt sich die Aufgabe einen Heckträger der eingangs genannten Art anzugeben, der bei einfachem Aufbau zu einer Gewichtsreduzierung führt.

Gelöst wird diese Aufgabe erfindungsgemäß durch die im Anspruch angegebenen Merkmale.

Danach ist die Standschiene an ihrem einen Ende schwenkbar am Tragrahmen gelagert.In ihrer waagerechten Erstreckung ist die Standschiene relativ zum Tragrahmen festlegbar.Zusammen mit einer auf der Straßenoberfläche abstützbaren Hebe- und Senkeinrichtung ist die Standschiene sowohl zur Aufnahme des motorisierten Zweirades als auch als Auffahrschiene einsetzbar.

Die Standschiene ist starr mit einer Traglasche verbunden,die ihrerseits über einen Bolzen eine Schwenkverbindung mit einem Querträger des Tragrahmens eingeht.Dabei dient die Traglasche der Herstellung eines vorgebbaren Abstandes zwischen Quertraverse und Standschiene.

Gemäß einer anderen Ausgestaltung ist die Standschiene schwenkbar mit einer Traglasche verbunden,die ihrerseits eine starre Verbindung mit dem Tragrahmen eingeht.Die Schwenkbewegung erfolgt hier z.B.mit Hilfe eines Scharniers zwischen Traglasche und Standschiene.

Eine weitere Ausbildung sieht vor,dass ein in das Verbindungsstück eingreifender Adapter des Tragrahmens und eine die Standschiene untergreifende Rohrtraverse von einer Tragstange des Leuchtenträgers durchsetzt und von Sicherungselementen in ihrer Position gehalten sind.Damit wird der Leuchtenträger in die Halterung der Standschiene mit einbezogen.

Eine ohne Verwendung der Tragstange des Leuchtenträgers auskommende Ausbildung sieht vor,dass die Standschiene von einer U-Profil Traverse untergriffen ist und dass nach Erreichen der waagerechten Erstreckung der Standschiene das dem Verbindungsstück abgewandte Ende des Adapters von der U-Profil Traverse übergriffen ist und eine Festlegung zueinander erfolgt.

Gemäß einer bevorzugten Ausgestaltung ist an dem der Traglasche abgewandten Ende der Quertraverse ein die Quertraverse untergreifender Aufhahmeschuh angebracht.Nach Erreichen der waagerechten Erstreckung der Standschiene ist in den Aufnahmeschuh ein Stütz- und Verriegelungselement eingeführt,auf dessen dem Aufnahmeschuh abgewandten Ende die Standschiene ruht.Ferner sind Arretierungselemente zur relativen Festlegung des Stütz- und Verriegelungselementes gegenüber dem Aufnahmeschuh und der Standschiene vorgesehen.Mit dem Stütz- und Verriegelungselement gelingt mit einfachen Mitteln eine zuverlässige Festlegung während der waagerechten Erstreckung der Standschiene.Nach dem Lösen der Arretierungselemente ist das Stütz- und Verriegelungselement mit wenigen Handgriffen zu entfernen.

Der Leuchtenträger ist vorteihafterweise an der Standschiene befestigt.Damit ist ein Entfernen und wieder Anbringen des Leuchtenträgers beim Aufbringen oder Entfernen eines Motorrades auf den bzw.von dem Heckträger nicht mehr erforderlich.

Mit dem freien Ende der Standschiene kann eine Verlängerungsschiene verbunden sein.Mit diesem Verlängerungsstück fällt die Steigung der Schräge geringer aus. Ferner wird ein Aufsetzen des Leuchtenträgers auf die Straßenoberfläche verhindert.

Zur Vereinfachung der Montage oder Demontage des Heckträgers wird vorgesehen,dass der Querträger in einer klauenartigen Aufnahme des Adapters abgestützt ist und eine lösbare Verbindung zwischen Querträger und Adapter entsteht.

Die lösbare Verbindung wird vorteilhafterweise durch Schrauben erzielt,die eine Rückseite der klauenartigen Aufnahme und ein Langloch der Quertraverse durchsetzen bevor sie in Gewindebohrungen eines Gegenlagers eingreifen.Während das Gegenlager die Montage vereinfacht führt die Langlochausbildung des Querträgers zu einer variablen Verwendungsmöglichkeit eines Heckträgers.

Anhand verschiedener Ausführungsbeispiele und der schematischen Figuren 1-11 wird der erfindungsgemäße Heckträger beschrieben.

Dabei zeigt
- Fig. 1: eine Aufsicht auf einen Heckträger,teilweise im Schnitt,
- Fig.2: einen Schnitt entlang der Linie II-II der Fig. 1,
- Fig,3: eine Ansicht in Pfeilrichtung III mit zur Straßenoberfläche geschwenkter Standschiene unter Weglassung des Leuchtenträgers,
- Fig.4: einen Schnitt gemäß Fig.2 mit einer anderen Ausgestaltung,
- Fig.5: einen Schnitt entlang der Linie V-V nach Fig.4,
- Fig.6: eine Aufsicht auf eine andere Ausbildung eines Heckträgers,
- Fig.7: einen Schnitt entlang der Linie VII-VII der Fig.6,
- Fig. 8: eine Ansicht in Pfeilrichtung VIII auf den Querträger 5,
- Fig.9: einen Schnitt entlang der Linie IX-IX der Fig. 8,
- Fig.10: eine Ansicht in Pfeilrichtung X unter Weglassung des Leuchtenträgers bei nach unten geschwenkter Standschiene und
- Fig.11: eine Seitenansicht eines Stütz- und Verriegelungselementes 29.

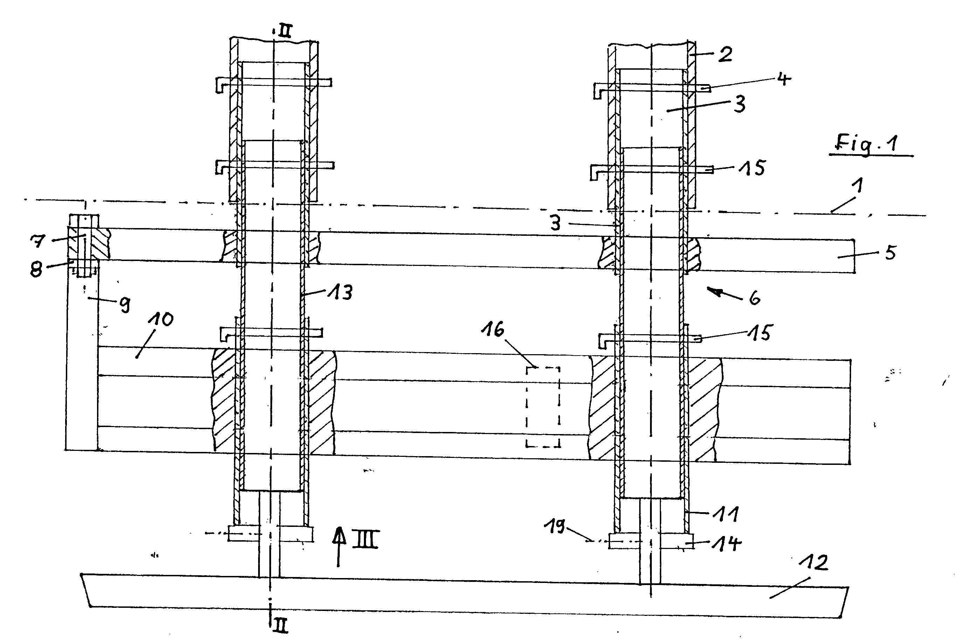

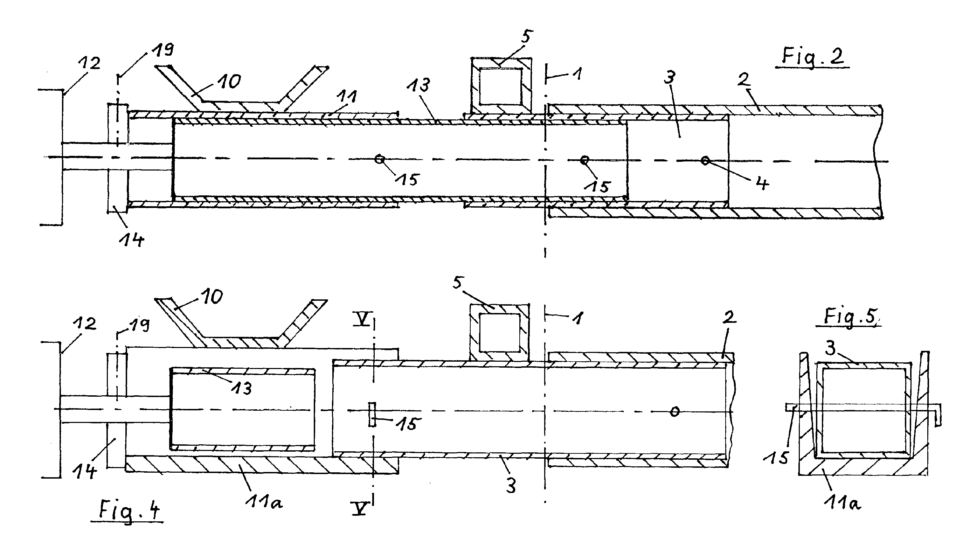

Die Fig. 1 und 2 symbolisieren mit der strichpunktiert gezeichneten Linie 1 den rückseitigen Abschluß eines Kraftfahrzeuges wie z.B.eines Wohnmobils.In zwei dem Wohnmobil zugeordnete,als Vierkantrohr ausgebildete, Verbindungsstücke 2 ist jeweils ein ebenfalls als Vierkantrohr ausgebildeter Adapter 3 eingeführt und mit einem Winkelbolzen 4 gesichert.Eine die Adapter 3 miteinander verbindende Quertraverse 5 aus Vierkantrohr bildet zusammen mit den Adaptern einen Tragrahmen 6 des Heckträgers für ein motorisiertes Zweirad.An ihrem einen Ende nimmt die Quertraverse 5 einen Bolzen 7 auf der eine Stirnplatte 8 einer aus Winkelprofil bestehenden Traglasche 9 durchsetzt,die somit ebenfalls einen Teil des Tragrahmens 6 darstellt.An der dem Bolzen 7 abgewandten Seite ist die Traglasche 9 mit einer Standschiene 10 für das nicht dargestellte motorisierte Zweirad verbunden.Die Standschiene 10 ruht auf zwei parallel zueinander erstreckten Vierkantrohrtraversen 11,die kraftschlüssig mit der Standschiene verbunden sind.Ein Leuchtenträger 12 durchsetzt mit seinen Tragstangen 13 die Vierkantrohrtraversen 11 und greift nach Längsverschiebung bis zu einem Anschlag 14 in je einen Adapter 3 ein. Splintgesicherte Winkelbolzen 4,15 durchsetzen einerseits Vierkantrohrtraverse 11 und Tragstange 13 und andererseits Adapter 3 und Tragstange 13.Die Standschiene 10 nimmt somit eine waagerechte Position ein und ist in ihrer Lage gesichert.

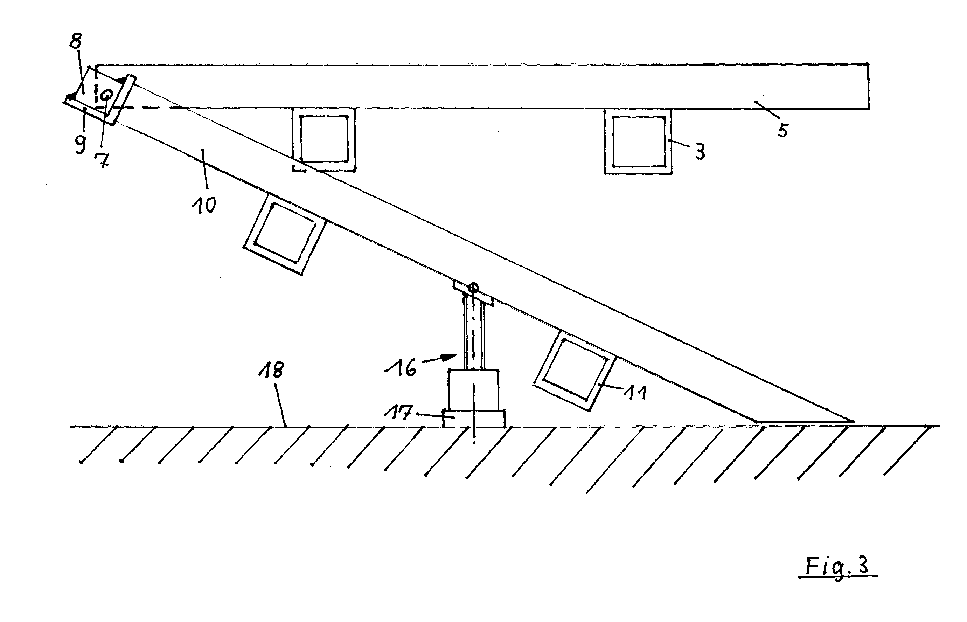

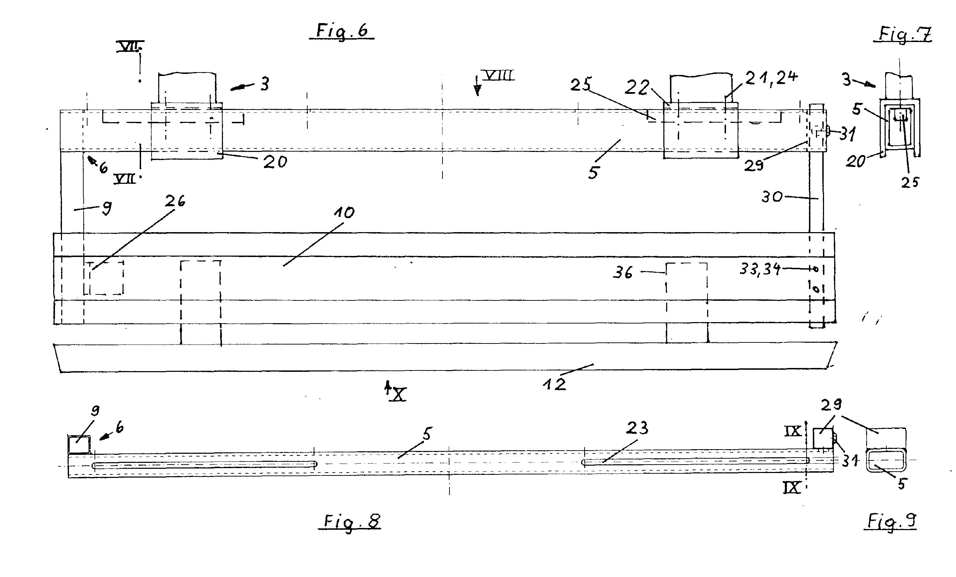

Soll das motorisierte Zweirad vom Heckträger entfernt bzw. auf denselben gebracht werden,dient gemäß Fig.3 die Standschiene 10 als Auffahrschiene für das motorisierte Zweirad.Nachdem die Winkelbolzen 4,15 entfernt,eine an der Unterseite der Standschiene 10 pendelnd aufgehängte Hebe-und Senkeinrichtung 16 mit ihrem Fußstück 17 gegen die Straßenoberfläche 18 abgastützt und der Leuchtenträger 12 soweit herausgezogen ist,dass seine Tragstangen 13 nicht mehr den Adapter 3 kontakten,wird durch Absenken der vorzugsweise kurbelbetriebenen Hebe-und Senkeinrichtung 16 die Standschiene 10 zusammen mit der Traglasche 9 um den Bolzen 7 geschwenkt,bis das freie Ende der Standschiene die Straßenoberfläche 18 kontaktet. Entlang der nunmehr gebildeten schiefen Ebene kann das motorisierte Zweirad bewegt werden. Nach erfolgter Be-und Entladung wird die Standschiene 10 wieder in ihre waagerechte Position gebracht.Die Tragstangen 13 werden bis zur Anlage des Anschlags 14 ,der mit einer Schraube 19 relativ zur Tragstange 13 festgelegt ist,an die Vierkantrohrtravers 11in den Adapter 3 eingeschoben.Die Winkelbolzen 4,15 werden eingebracht und gesichert.Danach wird die Hebe-und Senkeinrichtung 16 entlastet und durch Hochklappen an die Unterseite der Standschiene festgelegt.

Nach einem anderen in Fig. 4 und 5 dargestellten Ausführungsbeispiel,ist an Stelle der Vierkantrohrtraverse 11 eine U-Profil Traverse 11a vorgesehen.Das U-Profil ist mit seiner offenen Seite der Unterseite der Standschiene 10 zugewandt,wobei die Standschiene über nicht dargestellte Winkelprofile mit den Schenkeln des U-Profils verbunden ist. Soll die Standschiene 10 von ihrer die Straßenoberfläche 18 kontaktenden Position in die waagerechte Position gebracht werden,so erfolgt unter Einsatz der Hebe-und Senkeinrichtung 16 eine Schwenkbewegung um den Bolzen 7.Gegen Ende der Schwenkbewegung übergreift die oben offene U-Profiltraverse 11 a den als Vierkantrohr ausgebildeten Adapter 3 und wird über den Winkelbolzen 15 gegenüber dem Adapter 3 festgelegt.Die Tragestangen 13 des Leuchtenträgers 12 werden bei diesem Ausführungsbeispiel zur Verbindung mit dem Adapter 3 nicht benötigt. Sie werden mittels nicht dargestellter Befestigungsmittel gegenüber der U-Profiltraverse 11 a arretiert.

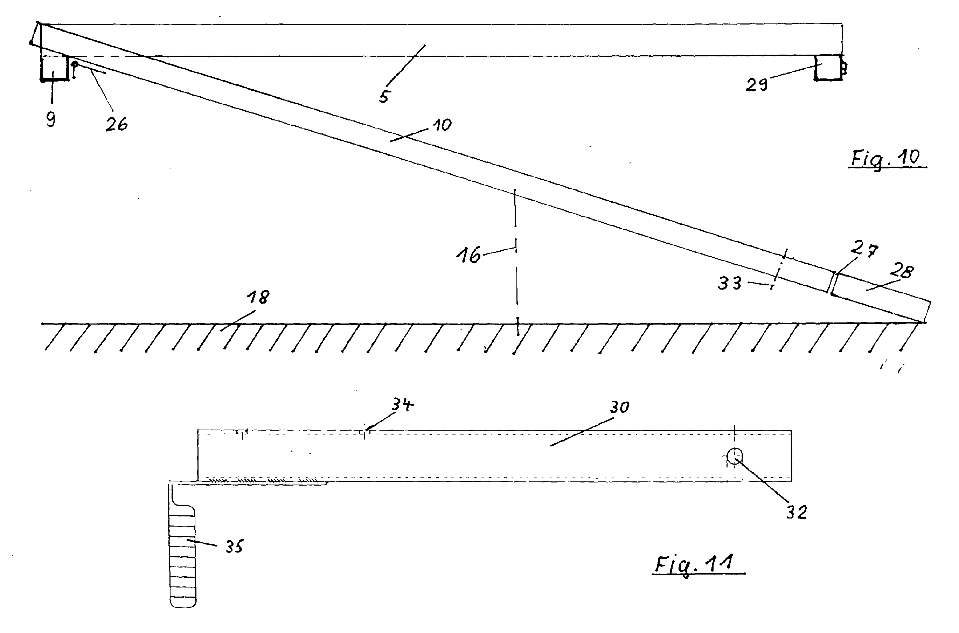

Ein weiteres in Fig.6-11 dargestelltes Ausführungsbeispiel zeigt eine an den jeweiligen Adapter 3 durch Schweißen befestigte klauenartige Aufnahme 20,die aus einem U-Profil hergestellt ist.Die Quertraverse 5 wird in die klauenförmige Aufnahme 20 eingesetzt und mittels Schrauben 21 lösbar mit ihr verbunden.Die Schrauben 21 werden durch Bohrungen in der Rückseite 22 und durch in die Quertraverse 5 eingebrachte Langlöcher 23 eingeführt und in je eine Gewindebohrung 24 eines Gegenlagers 25 eingeschraubt.Die als Flacheisen ausgebildeten Gegenlager 25 können leicht von der Seite her in die aus Vierkantrohr bestehende Quertraverse 5 eingebracht und mit einer ihrer Gewindebohrungen 24 einfach gegenüber der einzubringenden Schraube 21 positioniert werden Insbesondere bei einer aus Rundrohr bestehenden Quertraverse 5 kann die klauenförmige Aufnahme 20 einen halbkreisförmigen Querschnitt aufweisen, und anstelle von Schrauben mit einer Art Rohrschelle befestigt werden.Bei dem Ausführungsbeispiel nach Fig.6-11 untergreift die als Vierkantrohr ausgebildete Traglasche 9 den Querträger 5 und ist starr,z.B.durch Schweißen,mit dem Querträger 5 verbunden.Diese von der Traglasche 9 gebildete Auskragung des Tragrahmens 6 untergreift auch die Standschiene 10.Ein Scharnier 26 ist an einer Seitenwand der Traglasche 9 und an der Unterseite der Standschiene 10 befestigt und erlaubt die in Fig. 10 erkennbare Schwenkbewegung mit Unterstützung der Hebe- und Senkeinrichtung 16.An einer Stoßstelle 27 ist in Fig. 10 eine Verlängerungsschiene 28 durch eine nicht dargestellte Steckverbindung mit der Standschiene 10 verbunden.An ihrem der Traglasche 9 gegenüberliegenden Ende ist an der Unterseite der Quertraverse 5 ein Aufnahmeschuh 29 angeschweißt.Er besteht aus einem Vierkantrohr,das in seiner Länge etwa der Breite der Quertraverse 5 entspricht(Fig.9). Ein in Fig.6 ersichtliches und in Fig. 11 in einem größeren Maßstab dargestelltes Stütz- und Verriegelungselement 30 besteht aus einem Vierkantrohr,das mit einem vorgebbaren Spiel in den Aufnahmeschuh 29 eingeführt werden kann.Die Einführung erfolgt,sobald die Standschiene 10 mit Hilfe der Hebe- und Senkeinrichtung 16 eine waagerechte Erstreckung erreicht hat.Der Aufnahmeschuh 29 besitzt eine auf eine Seitenwand durch Schweißen aufgesetzte Mutter 31,wobei diese Seitenwand in Fortführung der Achse der Mutter 31 durchbohrt ist.Eine in die Mutter 31 eingeschraubte,von Hand anziehbare nicht dargestellte Flügelschraube durchsetzt die Seitenwand des Aufnahmeschuhes 29 und eine in Fig. 11 ersichtliche Bohrung 32 des Stütz- und Verriegelungselementes 30. Sie dient somit auf einfache Weise der Festlegung des Stütz- und Verriegelungselementes 30 relativ zur Quertraverse 5.Wie aus der Fig. 6 weiterhin ersichtlich ist,untergreift das Stütz- und Verriegelungselement 30 auch die Standschiene 10.Die Standschiene 10 ist mit zwei Durchtrittsöffnungen 33 versehen,die mit in Fig. 11 ersichtlichen Gewindebohrungen 34 des Stütz- und Verriegelungselementes 30 in Deckung gebracht werden.Zwei nicht dargestellte Flügelschrauben greifen durch die Durchtrittsöffnungen 33 in die Gewindebohrungen 34 ein und dienen somit zur Fixierung der Standschiene 10 relativ zu dem bereits gegenüber der Quertraverse 5 festgelegten Stütz- und Verriegelungselement 30.Soll die Standschiene 10 in die in Fig.10 gezeigte Stellung nach unten geschwenkt werden,werden nach Positionierung der Hebe- und Senkeinrichtung 16 die von Hand lösbaren nicht dargestellten Flügelschrauben entfernt. Das Stütz- und Verriegelungselement 30 wird nun an einem in Fig. 11 erkennbaren Handgriff 3 5 gepackt und und aus dem Aufnahmeschuh 29 herausgezogen und abgelegt.Mit Hilfe der Hebe- und Senkeinrichtung 16 kann nun nach Herstellung der Steckverbindung zwischen Standschiene 10 und Verlängerungsschiene 28 die Abwärtsschwenkbewegung der Standschiene 10 erfolgen.Der Leuchtenträger 12 ist über Laschen 36 unmittelbar an der Standschiene 10 befestigt.

## Patentansprüche

1. Heckträger für Kraftfahrzeuge zur Aufnahme eines motorisierten Zweirades mit einem an Verbindungsstücken (2) des Kraftfahrzeuges befestigten Tragrahmen (6),dem eine Standschiene (10) für das Zweirad zugeordnet ist und mit einem Leuchtenträger (12), **dadurch gekennzeichnet**, dass die Standschiene (10) an ihrem einen Ende schwenkbar am Tragrahmen (6) gelagert ist,dass die Standschiene in ihrer waagerechten Erstreckung relativ zum Tragrahmen festlegbar ist,und dass der Standschiene eine Hebe- und Senkeinrichtung (16) zugeordnet ist.

2. Heckträger nach Anspruch 1, dadurch gekennzeichnet, dass die Standschiene (10) starr mit einer Traglasche (9) verbunden ist,die ihrerseits über einen Bolzen (7) eine Schwenkverbindung mit einem Querträger (5) des Tragrahmens (6) eingeht.

3. Heckträger nach Anspruch 1,dadurch gekennzeichnet, dass die Standschiene (10) schwenkbar mit einer Traglasche (9) verbunden ist,die ihrerseits eine starre Verbindung mit dem Tragrahmen (6) eingeht.

4. Heckträger nach Anspruch 1 oder 2,dadurch gekennzeichnet, dass ein in das Verbindungsstück (2) des Kraftfahrzeuges eingreifender Adapter (3) des Tragrahmens (6) und eine die Standschiene (10) untergreifende Rohrtraverse (11) von einer Tragstange (13) des Leuchtenträgers (12) durchsetzt und von Sicherungselementen in ihrer Position gehalten sind.

5. Heckträger nach Anspruch 1 oder 3,dadurch gekennzeichnet, dass an dem der Traglasche (9) abgewandten Ende der Quertraverse (5) ein die Quertraverse untergreifender Aufnahmeschuh (29) angebracht ist,dass nach Erreichen der waagerechten Erstreckung der Standschiene (10) in den Aufnahmeschuh ein Stützund Verriegelungselement (30) eingeführt ist, und dass Arretierungselemente zur relativen Festlegung des Stütz- und Verriegelungselementes gegenüber dem Aufnahmeschuh und der Standschiene vorgesehen sind.

6. Heckträger nach Anspruch 1 oder 2,dadurch gekennzeichnet,dass die Standschiene (10) von einer U-Profil Traverse (11a) untergriffen ist,und dass nach Erreichen der waagerechten Erstreckung der Standschiene das dem Verbindungsstück (2) abgewandte Ende des Adapters (3) von der U-Profil Traverse übergriffen ist und eine Festlegung relativ zueinander erfolgt.

7. Heckträger nach Anspruch 1,3 oder 5,dadurch gekennzeichnet, dass der Leuchtenträger (12) unmittelbar an der Standschiene (10) befestigt ist.

8. Heckträger nach Anspruch 7,dadurch gekennzeichnet, dass mit dem freien Ende der Standschiene (10) eine Verlängerungsschiene (28) verbunden ist.

9. Heckträger nach einem der Ansprüche 1-8,dadurch gekennzeichnet, dass der Querträger (5) in einer klauenartigen Aufnahme (20) des Adapters (3) abgestützt ist und dass eine lösbare Verbindung zwischen Querträger und Adapter vorgesehen ist.

10. Heckträger nach Anspruch 9,dadurch gekennzeichnet,dass die lösbare Verbindung durch Schrauben (21) erzielt wird,die eine Rückseite (22) der klauenartigen Aufnahme (20) und ein in die Quertraverse (5) eingebrachtes Langloch (23) durchsetzen und in Gewindebohrungen (24) eines Gegenlagers (25) eingreifen.
